# EUROPEAN PATENT APPLICATION

(11) **EP 1 698 567 A1**
(43) Date of publication of application: **06.09.2006**
(21) Application number: 06003455.0
(22) Date of filing: 21.02.2006
(51) Int. Cl.: B65D 81/03, C08J 9/14

(54) **Protective sheet for packing**

(30) Priority: 01.03.2005 IT CO20050009
(71) Applicant: Proxital S.p.A., 31045 Motta di Livenza TV (IT)
(72) Inventor: Ronzini, Emanuele, 31045 Motta di Livenza (Treviso) (IT)
(74) Representative: Lecce, Giovanni

(57) **Abstract**

A protective sheet for packing (1) consisting of a film in elastic and flexible material fabricated by means of an extrusion process combined with the blowing-in of a gaseous element in pressure. The sheet (1) takes on a micro beehive structure (2) which is distributed and continuous throughout and preferably includes a raised surface with longitudinal undulations in sequence (4) nearly parallel to a flat surface (3). The thickness (5) of the sheet in between the raised undulations (4) is at least 1.0-1.5 mm, while at the top of the aforementioned raised undulations the thickness is at least 3.0-4.0 mm. Its apparent volumetric mass is included between 7 and 12 kg/m³.

## Description

The present invention refers to a protective sheet used for packing.

It is known that the current and more common protective sheets used for packing generally consist of a first smooth-drawn polyethylene film and a second film, of the same material as the first and sealed to it, treated with a hot drilled roller with suction which generates a series of sets of caps lined up and distributed along the entire surface of the film itself; the two films, coupled and sealed together, form composite sheets with one surface that is basically smooth and one surface featuring a limited number of raised caps, like small protruding blisters.

The thickness of these blisters, their intrinsic elasticity and the general flexibility of the structure of these sets contribute to creating flexible sheets with cushions capable of forming soft and elastic layers that can easily be wrapped around delicate objects, of any type and volume, to form protective packages and packing. Although these sheets are suitable enough for the protection of packaged products, they do have some disadvantages; specifically, they are rather expensive to produce because of long preparation times, and because they require special processing techniques as well as specific and expensive machinery, such as the aforementioned rotating drilled rollers with suction devices and equipment to seal the two films together.

Another disadvantage consists in the fact that these sheets do not offer uniform protection throughout their entire surface, since the blisters are geometrically shaped and regularly distributed in a limited number, and the spaces separating the blisters are basically empty; this condition results in the fact that the sheets do not offer full and uniform protection, especially for small objects, thin objects and/or items with sharp corners, and for objects made of very fragile materials and the like, unless multiple layers of sheets are used for the protective packaging, thus resulting in greater consumption of materials, bigger packaging volumes and higher packing costs.

Another disadvantage is the fact that, in order to be sufficiently elastic, the blisters have a very limited thickness (in the order of a few µm), which grants them an intrinsic fragility which may be the cause of breaking and/or popping when pressure is applied to them; in this case, the broken areas along the surface completely lose the required protective properties of the packing.

The purpose of this invention is to overcome the aforementioned disadvantages and guarantee better protection for packaged products.

The present invention, according to the claims herein, solves the problem by means of a protective sheet for packing which basically consists of a film, with a flat or non-flat surface, fabricated by means a single extrusion process of an elastic and flexible material such as polyethylene, combined with the blowing-in under pressure of a gaseous element, such as hydrocarbon gas or similar; this combined process generates a sheet with the desired thickness, preferably limited, having basically a micro beehive structure distributed and continuous all the way through.

The advantages offered by the present invention basically consist in the fact that the packing sheets according to this invention can be fabricated with a very limited thickness, with one flat surface and one surface with alternating longitudinal raised undulations in continuous strips, or with both surfaces featuring alternating longitudinal raised undulations in continuous strips.

In any case, the sheets basically consist of a continuous, soft, flexible and elastic micro beehive structure that can be easily wrapped around objects in order to protect them and that can act as a collision-dampener in the packing of products to be packaged.

The invention is described in detail below, according to the embodiments which are provided merely for example purposes and are not meant to be limitative, in reference to the drawing enclosed herein, in which:
fig. 1 represents an enlarged view of a partial cross-section of the micro beehive structure that makes up the protective sheet, fig. 2 represents a partial perspective view of a sheet with a smooth surface and one with alternating longitudinal raised undulations, in continuous strips, and
fig. 3 represents a partial perspective view of a sheet of film with both surfaces featuring alternating longitudinal raised undulations, in continuous strips.

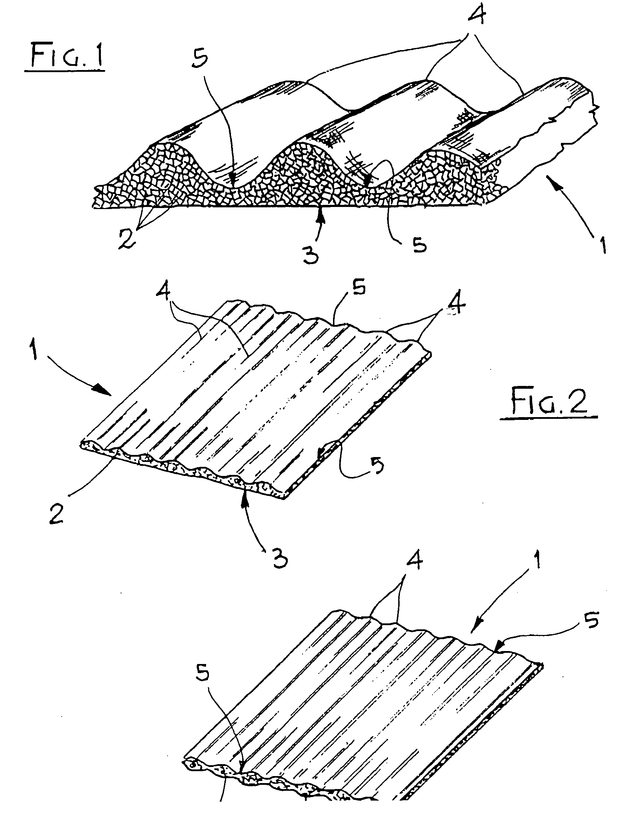

With reference to the figures, according to the invention protective sheet 1 basically consists of a layer of flexible elastic material, such as polyethylene, obtained through an extrusion process combined with the blowing-in of a gaseous element in pressure, for example a hydrocarbon gas such as isobutene or similar.

The gas-expanded extrusion process is regulated in order to obtain a flexible, elastic and soft sheet, with a continuous internal structure completely made up of micro beehives 2, so as to constitute a suitable mean for the specific function of packing protection for objects of any type and/or dimensions and/or materials and/or with very delicate and fragile shapes.

Purely for example purposes, and not for the purpose of limiting the scope of the invention, the sheet with a micro beehive structure features thickness values included between 3 and 4 mm, or more, with an apparent volumetric mass included between 7 and 12 kg/m³, calculated as follows:
- Determination of the weight of a sample with plan surface of 100 cm²,
- Determination of the apparent volume considering the maximum thickness of the sheet (measuring between the two highest points of the two sides by means of a dial gauge with a measurement area of approximately 10 cm² [reference standards UNI and ISO 1923], multiplied by the plan surface of the weighed sample,
- Calculation of the density, dividing the weight of the sample by the value of the determined apparent volume [reference UNI 6349/item 7.1].

Preferably, the extruded sheet has one smooth surface 3 while the other surface has alternating longitudinal raised undulations in continuous strips 4; however, this does not exclude the possibility of producing the sheet by extrusion with both surfaces featuring alternating longitudinal raised undulations (4, 4') in continuous strips.

In any case, these configurations are generated directly during a single operating phase, obtained by means of a known procedure in which the polymer in the granular state moves by means of a screw inside a tubular kiln, is progressively heated up until it melts and is then mixed with a gas in liquid state and at high pressure during the extrusion phase. The gas, preferably hydrocarbons such as isobutene or similar, is mixed with the flexible elastic material, such as polyethylene, and forms throughout its mass a multitude of micro bubbles, or micro beehives, arranged in a casual, scattered order.

The thickness of the sheet according to the invention, at the top of the undulations, is a few millimeters (for example at least 3-4 mm), so as to form soft and flexible longitudinal "cushions" which are capable of taking on any shape in order to adapt to the shape of the objects to be packed and of providing protections against collisions.

The micro beehive structure is designed to exclude the possibility of the protective packing becoming ineffective, which now results from the breaking and deflating of the blisters in the conventional sheets currently in use; in fact, the extremely high density of the micro beehives with the smallest dimensions is such that they are able to withstand without damage any collision and/or pressure on the packing without breaking or popping. In case some of the micro beehives do break or pop, although it is highly unlikely given their dimensions and density, this is irrelevant in terms of the overall validity of the packing.

In order to avoid similar inconveniences found in the use of today's sheets, where the blisters are distributed in a limited number along the surface of the sheet, even thickness 5 of the sheet according to the invention, included between the longitudinal undulations 4, is established to be a certain consistency (for example at least 1-1,5 mm); in this manner, adequate protection of the packaged items is ensured even in the thinnest areas, regardless of the shape and dimensions of the products to be packed, of the fact that they may be made of fragile materials, that they may have thin sections, and so on.

While this invention was described and illustrated according to the embodiments given only for example purposes, and not for the purpose of limiting the scope of the invention, it will be very clear to those skilled in the art that numerous changes may be made to the structure, the proportions and the components used, and that such changes and modifications may be made without departing from the spirit of the invention.

## Claims

1. Protective sheet for packing (1) made of a film in elastic and flexible material obtained by means of an extrusion process combined with the blowing-in of a gaseous element in pressure, wherein it is formed a micro beehive structure (2) with limited thickness distributed and continuous along its entire surface and including at least one surface with longitudinal undulations in sequence (4) nearly parallel to a flat surface (3).

2. Protective sheet for packing according to claim 1, wherein its limited thickness is at least 1-1.5 mm, in-between the aforementioned undulations (4), and at least 3-4 mm, at the top of the same undulations, with an apparent volumetric mass included between 7 and 12 kg/m³.

3. Protective sheet for packing according to claims 1 and 2, wherein the elastic and flexible material with an internal micro beehive structure, of which it is made, is polyethylene.

4. Protective sheet for packing according to claims from 1 to 3, wherein the blowing-in gas used during the extrusion process of the elastic and flexible material with an internal micro beehive structure is a hydrocarbon gas, such as isobutene or similar.

5. Protective sheet for packing according to claims from 1 to 4, wherein the sheet has one surface that is flat, smooth and continuous (3) while the other surface has alternating raised continuous undulations (4).

6. Protective sheet for packing according to claims from 1 to 4 wherein said sheet has two surfaces (4),(4') equipped with alternating raised continuous undulations.

7. Protective sheet for packing according to the previous claims, wherein the sheet is obtained by extrusion with the blowing-in of a gas, where the gas in the liquid state and at high pressure is mixed with the elastic flexible material, such as polyethylene forming inside the material a multitude of microscopic bubbles, or microscopic beehives, arranged in a casual and scattered order.
